# EUROPÄISCHE PATENTANMELDUNG

(11) **EP 3 660 791 A1**
(43) Veröffentlichungstag der Anmeldung: **03.06.2020**
(21) Anmeldenummer: 18208734.6
(22) Anmeldetag: 27.11.2018
(51) Int. Cl.: G06T 19/20, H04N 13/106, A61C 13/00

(54) **COMPUTERIMPLEMENTIERTES VERFAHREN ZUM ERFASSEN VON DREIDIMENSIONALEN OBERFLÄCHENGEOMETRIEN**

(71) Anmelder: a.tron3d GmbH, 9020 Klagenfurt am Wörthersee (AT)
(72) Erfinder: JESENKO, Juergen, 9587 Riegersdorf (AT)
(74) Vertreter: Beer & Partner Patentanwälte KG

(57) **Zusammenfassung**

Bei einem computerimplementierten Verfahren zum Erfassen von dreidimensionalen Oberflächengeometrien von realen, intraoralen Strukturen, werden zweidimensionale Bilder der intraoralen Strukturen in dreidimensionale, virtuelle Oberflächengeometrien umgewandelt. Pixel der zweidimensionalen Bilder werden jeweils in Segmente aufgeteilt und jedes Segment erhält ein Label. Jedes Segment eines zweidimensionalen Bildes korrespondiert mit wenigstens einer Art der realen, intraoralen Strukturen. Es gibt wenigstens zwei Arten von Segmenten, wobei jede Art von Segment ein anderes Label hat und wenigstens eines der Label Zähne und zahnartige Strukturen repräsentiert.

## Beschreibung

Die Erfindung betrifft ein computerimplementiertes Verfahren zum Erfassen von dreidimensionalen Oberflächengeometrien von realen, intraoralen Strukturen, bei dem zweidimensionale Bilder der intraoralen Strukturen in virtuelle, dreidimensionale Oberflächengeometrien umgewandelt werden.

Insbesondere im Bereich dentaler Behandlungen sind viele Systeme zum optischen Erfassen der dreidimensionalen Oberflächengeometrie von Objekten bekannt. Diese finden beispielsweise Anwendung beim Erstellen von Prothesen, Kronen, Inlays oder dergleichen, dienen der Unterstützung bei der Überwachung von kieferorthopädischen Behandlungen und/oder helfen ganz allgemein bei der Beobachtung bzw. Erfassung von intraoralen Strukturen. Der große Vorteil derartiger optischer Systeme liegt zum einen darin, dass sie weder invasiv, noch unangenehm sind, wie beispielsweise der in der herkömmlichen Zahnmedizin häufig verwendete Zahnabdruck, und dass sie auch keine potentielle Gefährdung des Patienten darstellen, wie es beispielsweise bei strahlungsbasierten Methoden, wie dem Röntgen, der Fall sein kann. Zum anderen liegen die Daten nach dem Erfassen in elektronischer Form vor und lassen sich einfach speichern, beispielsweise für spätere Vergleiche, oder auch übermitteln, beispielsweise von einem Zahnarzt zu einem zahntechnischen Labor.

Eine der wesentlichen Aufgaben, die sich beim Verbessern von Methoden zum optischen Erfassen von Oberflächengeometrien stellt, ist das Verbessern der Genauigkeit der erfassten Oberflächengeometrie und der Geschwindigkeit des Erfassens. Hierfür wird vor allem ein korrektes und schnelles Matching zwischen den einzelnen zweidimensionalen, 2,5-dimensionalen und/oder dreidimensionalen Bildern und/oder Segmenten angestrebt.

Der Erfindung liegt daher die Aufgabe zu Grunde, die Verarbeitung von zweidimensionalen Bildern zu virtuellen dreidimensionalen Oberflächengeometrien zu verbessern.

Gelöst wird diese Aufgabe erfindungsgemäß durch ein computerimplementiertes Verfahren mit den Merkmalen des Anspruchs 1.

Ein Bild im Sinne der Erfindung kann dabei eine einzelne, zweidimensionale Aufnahme oder aus zwei oder mehreren zweidimensionalen Aufnahmen zu einem Bild zusammengefügt sein.

Die übliche Abfolge beim optischen 3D-Scannen ist, dass zunächst zweidimensionale Bilder aufgenommen werden, aus diesen Bildern dann reliefartige Tiefeninformationen gewonnen werden, die als 2,5D angesehen werden, und dann wenigstens zwei 2,5D Datensätze zu virtuellen 3D-Objekten zusammengefügt werden. Für den letzten Schritt ist üblicherweise wenigstens eine paarweise Überschneidung der 2,5D-Datensätze notwendig. Eine erprobte Methode für das Umwandeln von 2D-Daten in 3D-Daten, die auch bei der Erfindung angewendet werden kann, ist beispielsweise aus der US 9 544 577 B2 bekannt.

Grundsätzlich ist es bei Scannern, die sich nicht in einem erzwungenen räumlichen Verhältnis zu dem zu scannenden Objekt befinden, üblich und erforderlich, die Kamerabewegung zwischen einzelnen Bildern zu ermitteln. Dabei kann im wörtlichen Sinne die Bewegung der Kamera ermittelt werden oder auch lediglich die mathematische Translation (Translationsvektor) und Rotation (Rotationsmatrix), die notwendig ist, um die neuen Tiefeninformationen in die vorhandenen virtuellen, dreidimensionalen Oberflächengeometrien einzufügen (der Translationsvektor und die Rotationsmatrix ergeben die Translationsmatrix). Häufig werden die Begriffe Kamerabewegung und Translationsmatrix auch austauschbar verwendet, da sie für die Datenverarbeitung äquivalent sind.

Sehr einfach gesagt wird für jeden 2,5D-Datensatz ermittelt, in welcher relativen Lage zur aufgenommenen intraoralen Struktur und mit welchem Blickwinkel, mit welchem das zugrundeliegende zweidimensionale Bild aufgenommen wurde, sich der Sensor befunden hat. Das Aneinanderreihen der Sensorpositionen, bzw. der Information, wie sich ein Sensor von einem Bild zu einem folgenden Bild bewegt hat, ergibt zusammen mit den Tiefeninformationen die virtuelle, dreidimensionale Oberflächengeometrie. So kann auch für jeden Bereich der virtuellen Oberflächengeometrie gesagt werden, wie oft er von einem Sensor "gesehen" wurde.

Bezieht man dabei auch Labels, welche erfindungsgemäß vergeben werden, mit ein, kann man zusätzlich zu der Aussage, wie oft ein bestimmter Bereich der virtuellen, dreidimensionalen Oberflächengeometrie "gesehen" wurde, auch eine Aussage darüber treffen, wie oft in einem bestimmten Bereich ein bestimmtes Label "gesehen" wurde.

Dass ein Bereich "gesehen" wird, kann in diesem Zusammenhang mit dem menschlichen Sehen verglichen werden und bedeutet, dass ein Sensor ein Abbild einer Struktur erfasst hat, und dass das erfasste Abbild wenigstens teilweise interpretiert wurde. Das Interpretieren kann sowohl das Segmentieren als auch das Ermitteln von Tiefeninformationen beinhalten.

Gemäß einer besonders bevorzugten Durchführungsform der Erfindung erfolgt das Labeln durch eine künstliche Intelligenz, wobei die künstliche Intelligenz darauf trainiert wurde, in digitalen Bildern wenigstens Zähne zu erkennen. Die künstliche Intelligenz ist vorzugsweise ein neuronales Netzwerk, insbesondere ein Convolutional Neural Network.

Vor dem Erzeugen der dreidimensionalen Oberflächengeometrien werden die Pixel zusätzlich zu ihren bereits vorhandenen Informationen automatisch in wenigstens zwei verschiedene Klassen klassifiziert und mit entsprechenden Labels versehen, wobei eines der Label Zähne und zahnartige Strukturen repräsentiert.

Die bereits vorhandenen Informationen in einem Pixel können beispielsweise die Helligkeit des Pixels und die Koordinate des Pixels im Bild sein.

Ein Pixel, im Sinne der Erfindung, kann auch repräsentativ für mehrere Pixel stehen, beispielsweise wenn das zweidimensionale Bild vor dem Segmentieren komprimiert wurde.

Es kann vorkommen, dass in einem Bild ausschließlich eine Art der intraoralen Strukturen, beispielsweise nur Zahn oder nur Zahnfleisch, abgebildet ist. In diesem Fall wird das Bild im Sinne der Erfindung in nur ein Segment aufgeteilt bzw. es werden alle Pixel des Bildes einem Segment zugewiesen und mit einem Label versehen.

"Zähne und zahnartige Strukturen" kann dabei alles umfassen, was visuell einem Zahn entspricht. Dies kann beispielsweise jedoch nicht limitierend Strukturen aus der folgenden Gruppe umfassen: Zähne, Kronen, Implantate, Inlays, Füllungen, Brücken und dergleichen.

Damit ein Segment Zähne und zahnartige Strukturen repräsentiert, können in der einfachsten Durchführungsform die Zähne und zahnartigen Strukturen erkannt und beispielsweise als "Zahn" klassifiziert werden.

Es ist aber beispielsweise auch möglich, alle Bereiche zu erkennen und zu klassifizieren, die keine Zähne sind. Das dabei verbleibende Label "Rest" repräsentiert ebenfalls die Zähne.

Der Vorgang, dass durch die künstliche Intelligenz bereits auf zweidimensionaler Ebene die Unterscheidung zwischen "Zahn" und "Nicht-Zahn" getroffen wird, stellt zwar einen zusätzlichen Schritt dar, weshalb der Fachmann erwarten würde, dass das gesamte Verfahren verlangsamt wird, allerdings bringt der Vorgang in der Folge eine solche Vielzahl an Vorteilen, dass die "verlorene" Zeit in der folgenden Verarbeitung wieder aufgeholt werden kann.

Die eingesparte Zeit lässt sich vor allem durch weniger fehlerhafte Matchings, die dann verworfen werden müssen, erklären. Matchings sind grundsätzlich Paarungen zwischen zwei oder mehr Bestandteilen von wenigstens zwei zweidimensionalen Bildern, zu denen ein räumliches Verhältnis bekannt ist oder ermittelt wird. Aus einem zweidimensionalen Matching mit einem bekannten oder ermittelten räumlichen Verhältnis können Tiefeninformationen gewonnen werden. Die Bestandteile der zweidimensionalen Bilder stehen dabei in direkter Relation zu den realen Objekten, welche in den Bildern abgebildet sind. Wichtig ist dabei, dass jeder Bestandteil, der zum Gewinnen von Tiefeninformationen hinzugezogen wird, möglichst eindeutig erkannt bzw. bestimmt werden kann. Anders gesagt: für die Qualität des gesamten Scanvorganges ist eine hohe Sicherheit, dass zwei gepaarte (oder gematchte) Elemente in zwei zweidimensionalen Bildern denselben Bereich am selben Objekt zeigen, entscheidend. Diese Sicherheit steigt, wenn fehlerhafte Matchings ausgeschlossen werden können. Die Bestandteile der zweidimensionalen Bilder können ein oder mehr Pixel groß sein. Wenn die zweidimensionalen Bilder, wie erfindungsgemäß vorgesehen, klassifiziert bzw. Bereiche und/oder Pixel der Bilder Klassifizierungen entsprechend gelabelt werden, können Matchings so limitiert werden, dass sie nur noch innerhalb desselben Labels erfolgen. Dadurch werden fehlerhafte Matchings zwar nicht vollständig ausgeschlossen, aber ein großer Anteil der fehlerhaften Matchings kann vermieden werden. So können beispielsweise Zähne in einem Bild und Zahnfleisch in einem anderen Bild nicht mehr versehentlich miteinander gematcht werden.

Bevorzugt ist, wenn die in den zweidimensionalen Bildern/Bereichen vergebenen Labels auch in späteren Datenebenen, also als 2,5D- und 3D-Informationen, vorhanden sind.

Wenn die 2,5D Informationen Segmente aufweisen, kann dies das Zusammenfügen der 2,5D-Datensätze zu 3D-Oberflächen vereinfachen, da auch hier Anknüpfungspunkte gesucht werden müssen, und ein Limitieren der möglichen Anknüpfungspunkte auf jene Anknüpfungspunkte, welche dieselben Labels aufweisen, Fehlerquellen minimiert und so den Vorgang beschleunigt.

Wenn die Labels bis in die dreidimensionale Datenebene erhalten bleiben, kann dies für weitere Schritte, wie beispielsweise ein Einfärben des 3D-Modells, verwendet werden. So bietet es sich beispielsweise an, alle Oberflächen mit der Klasse "Zahn" weiß einzufärben und alle übrigen Oberflächen rosa einzufärben. In einer bevorzugten Weiterbildung der Erfindung ist daher beispielsweise vorgesehen, dass den Segmenten Farben zugewiesen werden und dass Bereiche der erzeugten dreidimensionalen Oberflächengeometrie entsprechend der Labels der korrespondierenden Segmente der digitalen Bilder eingefärbt werden.

Erfindungsgemäß entsprechen die Segmente Arten von intraoralen Strukturen. Gemäß einer bevorzugten Weiterbildung der Erfindung können die Arten von Strukturen also beispielsweise
- weiches Gewebe (wie Zungen, Wangen und dergleichen),
- hartes Gewebe (wie Zahnfleisch oder Gaumen),
- zahnartige Strukturen (wie Zähne oder Zahnersatz, der Zähnen nachempfunden ist),
- künstliche Strukturen (wie Teile von Zahnspangen, Zahnersatz, der als solcher zu erkennen ist, Teile von rekonstruktiven Vorbereitungen wie beispielsweise Abutments oder dergleichen),
- Übergänge zwischen einzelnen Arten von Strukturen oder
- alles, was nicht identifiziert werden kann (wie beispielsweise Hintergrund oder zu stark durch Karies beschädigte Zähne),
sein.

Je nachdem, wie das neuronale Netzwerk zuvor trainiert wurde, können alle vorgenannten Arten identifiziert werden oder auch nur ausgewählte Arten. Alle nicht identifizierten Arten können dann beispielsweise unter einer weiteren Art "Rest" zusammengefasst werden. Ein Segment kann auch mehrere Arten von intraoralen Strukturen umfassen, wie beispielsweise "Zahnfleisch und Weichgewebe" oder "Zähne, zahnartige Strukturen und künstliche Strukturen". Die Anzahl der Arten von unterschiedlichen Segmenten, in die segmentiert wird, hat dabei sowohl Einfluss auf die Komplexität des Trainings des neuronalen Netzwerks, als auch auf die Komplexität (aber auch die Präzision) des späteren Scanvorganges.

Durch das Vergeben weiterer Labels lassen sich mehr Oberflächen erfassen und das Verfahren wird weiter beschleunigt und verbessert. Die übrigen Bereiche können beispielsweise der Hintergrund, aber auch Übergangsbereiche sein, bei denen die künstliche Intelligenz keines der sonstigen Labels vergeben konnte.

In der Realität hat es sich gezeigt, dass es besonders vorteilhaft ist, wenn die Segmente "Zahn", "Zahnfleisch", "Übergang" und "Rest" identifiziert werden. Dabei können beispielsweise die Segmente "Zahn", "Zahnfleisch" und "Übergang" identifiziert und gelabelt und alle nicht-vergebenen Bereiche der Bilder automatisch als "Rest" gelabelt werden.

Selbstverständlich könnten auch beispielsweise "Zahnfleisch" und "Hintergrund" identifiziert werden und alles Übrige als "Zahn" gelabelt werden. Welche Prioritäten hier beim Training des neuronalen Netzwerks gesetzt werden, hängt vom Anwender ab und hat keinen oder vernachlässigbaren Einfluss auf die Funktionalität der Erfindung.

In einer weiteren, bevorzugten Weiterbildung der Erfindung enthalten die Labels neben der jeweiligen Klasse zusätzliche Informationen. Diese Informationen können beispielweise Farbinformationen sein, die zu der Bewertung "Zahn" oder "Zahnfleisch" geführt haben.

In einer bevorzugten Weiterbildung der Erfindung weisen die Labels neben der Art der intraoralen Struktur auch eine Wahrscheinlichkeit auf, die angibt, wie wahrscheinlich ein korrektes Label vergeben wurde. Diese Wahrscheinlichkeit kann in einer weiteren bevorzugten Weiterbildung der Erfindung in eine Gewichtung der dreidimensionalen, virtuellen Oberflächengeometrie einfließen.

Werden die 3D-Informationen beispielweise in einer voxelbasierten Notation hinterlegt, können die einzelnen Voxel Gewichtungen enthalten. In diese Gewichtung können die Wahrscheinlichkeiten ebenfalls einfließen und damit den Vorteil solcher Gewichtungen verstärken. Nähere Erklärungen, wie Gewichtungen funktionieren und welche Vorteile sich daraus für das 3D-Scannen ergeben, können beispielsweise der US 2015/0024336 A1 entnommen werden.

Gemäß einer weiteren Weiterbildung der Erfindung werden die Bilder aufgenommen, während die Strukturen sequenziell mit einer von wenigstens zwei, bevorzugt vier, Arten von Licht beleuchtet werden. Dabei entstehen Gruppen von Bildern, die jeweils die intraoralen Strukturen in einer anderen Art beleuchtet zeigen. Daraus können Informationen gewonnen werden, die sowohl für das Bilden von virtuellen, dreidimensionalen Oberflächengeometrien, als auch für das Segmentieren wertvoll sein können.

Eine erste Möglichkeit und bevorzugte Durchführungsform der Erfindung ist beispielsweise, dass die Bilder aufgenommen werden, während die Strukturen sequenziell mit einer von drei Arten von Licht beleuchtet werden, und dass die drei Arten von Licht Licht in verschiedenen Farben, bevorzugt rot, grün oder blau projiziertes Licht sind. So können auch bei der Verwendung eines monochromen Sensors Farbinformationen gewonnen werden.

So kann beispielsweise in einer weiteren, bevorzugten Durchführungsform der Erfindung das Segmentieren durch das neuronale Netzwerk auf Basis einer reflektierten Lichtintensität in Abhängigkeit von der projizierten Farbe erfolgen. Hierfür kann man den Umstand ausnutzen, dass Zähne aufgrund ihrer opaleszenten Eigenschaften blaues Licht, welches weniger tief eindringt, anders reflektieren, als beispielsweise rotes Licht, oder dass Zahnfleisch unter rotem Licht anders sichtbar ist, als unter grünem.

In einer weiteren bevorzugten Durchführungsform der Erfindung wird eine Art von Licht strukturiert, insbesondere als Muster, auf die intraoralen Strukturen projiziert. Strukturiertes Licht kann dabei besonders helfen, besonders präzise geometrische Oberflächeninformationen zu erhalten. Strukturiertes Licht kann beispielsweise in Form regelmäßiger oder unregelmäßiger Muster vorliegen, die auf die intraoralen Strukturen projiziert werden, wie beispielsweise gleichmäßige Streifen oder zufällig verteilte Punkte. Strukturiertes Licht kann aber beispielsweise auch Laserlicht sein, wobei die auf den beleuchteten Objekten auftretenden Speckles zum Verbessern der geometrischen Oberflächeninformationen verwendet werden.

In einer weiteren, ganz besonders bevorzugten Durchführungsform der Erfindung ist vorgesehen, dass ein Bereich der virtuellen, dreidimensionalen Oberflächengeometrie mittels Daten aus mit dem Bereich korrespondierenden Pixeln wenigstens eines zweidimensionalen Bildes aktualisiert wird, und dass erfasst wird, wie oft die Pixel ein bestimmtes Label aufweisen. So kann über jeden Bereich eine Aussage getroffen werden, wie oft der Bereich mit einem bestimmten Label aktualisiert wurde.

Aus dieser Information lassen sich verschiedene weiterführende Informationen gewinnen, die beispielsweise darüber eine Aussage treffen lassen, wie wahrscheinlich die Segmentierung korrekt erfolgt ist, oder die einfach einen robusteren Scanvorgang ermöglichen.

Weitere bevorzugte Durchführungsformen der Erfindung sind Gegenstand der übrigen Unteransprüche.

Nachstehend ist ein bevorzugtes Durchführungsbeispiel der Erfindung anhand der Zeichnungen näher beschrieben. Es zeigt:

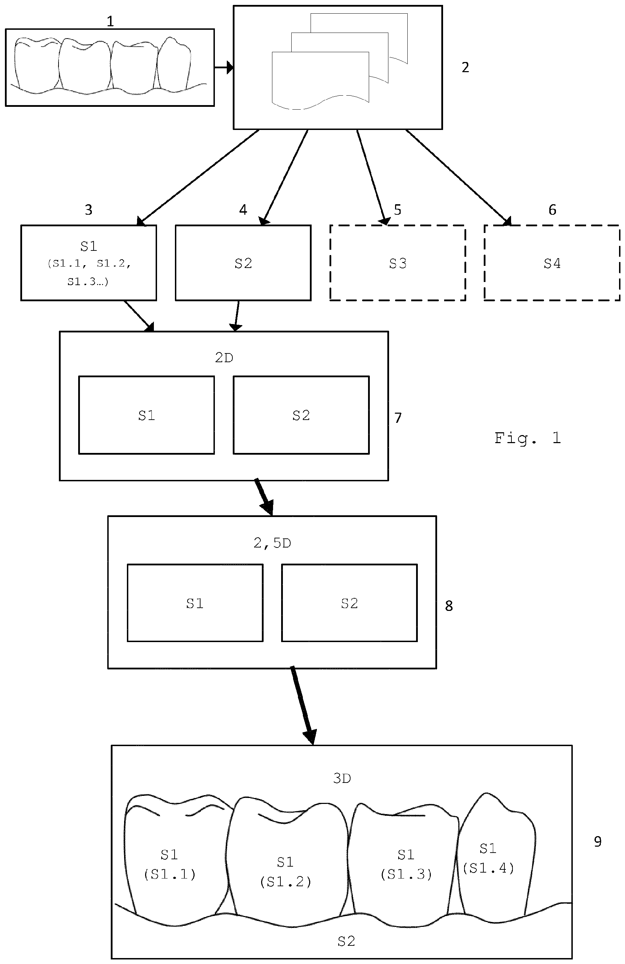

- Fig. 1: eine schematisierte Darstellung eines beispielhaften, erfindungsgemäßen Verfahrens.

In der Darstellung von Fig. 1 wird zunächst eine Reihe von zweidimensionalen Bildern 2 von intraoralen Strukturen 1 gemacht. Abhängig von der Methode, mit der die zweidimensionalen Bilder 2 zu dreidimensionalen Oberflächeninformationen umgewandelt werden, kann theoretisch auch ein einzelnes zweidimensionales Bild 2, die in dreidimensionale Oberflächeninformationen umgewandelt wird, von den Vorteilen des Verfahrens profitieren. Im Rahmen des dargestellten Beispiels wird jedoch - ohne die Erfindung darauf zu limitieren - von einer Reihe von wenigstens zwei aufeinanderfolgenden Bildern 2 ausgegangen.

Die zweidimensionalen Bilder 2 werden dann pixelweise in Segmente 3, 4, 5, 6 unterteilt. Es gibt verschiedene Arten von Segmenten, wobei jede Art von Segment mit einer Art von intraoraler Struktur korrespondiert. In der einfachsten Durchführungsform kann bei den Arten beispielsweise zwischen "Zähne und zahnartige intraorale Strukturen" und "Rest" unterschieden werden. In weiterentwickelten Durchführungsformen können beispielsweise auch "Zahnfleisch", "Weichgewebe", "Übergang zwischen Zahnfleisch und Zahn" und dergleichen als eigene Arten von intraoralen Strukturen betrachtet werden und als entsprechende Arten von Segmenten 3, 4, 5, 6 möglich sein.

In einer bevorzugten Durchführungsform der Erfindung werden die einzelnen Zähne und zahnartigen Objekte jeweils als eigenes Segment mit einem eigenen Label betrachtet. Dabei wird nicht darauf geachtet, welcher Zahn an welcher Stelle im Mund angeordnet ist, sondern es wird einfach davon ausgegangen, dass zwei Zahn-Segmente, die beispielsweise durch ein Übergangs- oder auch ein Rest-Segment getrennt werden, jeweils auch mit zwei separaten Zähnen oder zahnartigen Strukturen korrespondieren.

Zahnartige Strukturen bzw. Objekte im Sinne der Erfindung sind alle intraoralen Strukturen, die im Bereich der Zähne oder anstelle der Zähne angeordnet sind. Beispielhaft, aber nicht abschließend, seien an dieser Stelle Kronen, Implantate und Inlays als mögliche zahnartige Objekte bzw. Strukturen genannt, die selbst keine Zähne sind, aber für das erfindungsgemäße Verfahren wie Zähne behandelt werden.

Nachdem die zweidimensionalen Bilder 2 in zwei (Zähne, Rest) oder mehr (Zähne, Zahnfleisch, Weichgewebe, Übergänge etc.) Segmente 3, 4, 5, 6 aufgeteilt wurden, werden jene Segmente ausgewählt, mit denen in den folgenden Schritten weitere Berechnungen ausgeführt werden sollen.

Diejenigen Segmente 5, 6, mit denen keine weiteren Berechnungen ausgeführt werden sollen, können verworfen werden, sie können aber auch ohne weitere Verarbeitung gespeichert bleiben und gegebenenfalls für andere Prozesse verwendet werden.

Mit den ausgewählten Segmenten 7 werden dann 2,5D-Oberflächen 8 erzeugt. Bei diesem Vorgang ist wichtig, dass die jeweiligen Oberflächenbereiche der 2,5D-Oberflächen 8 weiterhin den zuvor ausgewählten Segmenten 7 entsprechen, und dies korrespondierend zu den in den zweidimensionalen Bildern 2 vergebenen Labels.

Die Methode, mit der man von den zweidimensionalen Bildern 2 zu den 2,5D-Oberflächen 8 gelangt, kann vom Fachmann frei gewählt werden und hängt im Wesentlichen von der gewählten Methode ab, mit der die zweidimensionalen Bilder 2 erzeugt wurden. Wurden die Bilder stereometrisch erzeugt, können in Bildpaaren Disparitäten ermittelt werden. Wurden die Bilder 2 bei gleichzeitiger Projektion eines bekannten Musters erzeugt, kann in jedem einzelnen Bild anhand der Verzerrung des Musters die Oberflächenstruktur bestimmt werden. Diese beiden Möglichkeiten werden an dieser Stelle lediglich beispielhaft genannt. Der Fachmann kann frei unter den verfügbaren und hinreichend bekannten und beschriebenen Methoden wählen.

Vorteilhaft ist, dass bereits bei diesem Schritt Rechenressourcen eingespart werden können, da nur jene Pixel auf den zweidimensionalen Bildern zum Umwandeln herangezogen werden, die auch die entsprechenden Labels aufweisen.

Wie auch bei den im Stand der Technik bekannten Methoden besteht der nächste Schritt des Verfahrens darin, dass die einzelnen 2,5D-Oberflächen zueinander und/oder zu einer bereits vorhandenen, virtuellen, dreidimensionalen Oberflächengeometrie in Bezug gebracht und zusammen- bzw. hinzugefügt werden. Hierfür kann beispielsweise der dem Fachmann hinreichend bekannte ICP-Algorithmus verwendet werden. Ausführlichere Erklärungen für den aus dem Stand der Technik bekannten Schritt können beispielsweise der EP 2 672 461 A1 entnommen werden.

Neu gegenüber dem Stand der Technik sind die speziellen Aktionsmöglichkeiten und Vorteile, die sich aus den 2,5D-Oberflächen, die eine Einteilung in Segmente aufweisen, ergeben, da bei diesem Schritt Oberflächen gesucht werden, die sich zumindest bereichsweise im Wesentlichen aufeinander abbilden lassen. Bereichsweise bedeutet in diesem Fall, dass die einzelnen Oberflächen nicht vollständig überlappen müssen. Dass die Oberflächen im Wesentlichen aufeinander abgebildet werden, schließt ein, dass die Oberflächen im Rahmen von Messfehlern in der Regel nicht zu 100% akkurat aufeinander abgebildet werden können.

Die erfindungsgemäße Anpassung des Verfahrens bringt dabei zwei wesentliche Vorteile bzw. Verbesserungen gegenüber dem Stand der Technik. Zum einen müssen jene Oberflächen, die weder Zähne noch Zahnfleisch sind, wie beispielsweise eine versehentlich aufgenommene Zunge oder über das Zahnfleisch hinausgehendes Weichgewebe, nicht eingepasst werden, da hierfür keine 2.5D-Oberflächen erzeugt wurden. Zum anderen können fehlerhafte Matchings bzw. Abbildungen minimiert werden, da die Einschränkung, dass nur Oberflächen, die Zähne darstellen, auf Oberflächen, die Zähne darstellen, abgebildet werden, und solche Oberflächen, die Zahnfleisch darstellen, auf Oberflächen, die Zahnfleisch darstellen, abgebildet werden.

Bevorzugt bleibt auch für die virtuellen, dreidimensionalen Oberflächengeometrien 9 notiert, welche Bereiche (und nun Oberflächen) in den ursprünglichen, zweidimensionalen Bildern als welche Segmente gelabelt wurden. Diese Informationen können gemäß einer weiteren, bevorzugten Weiterbildung der Erfindung für weitere Optimierungen der virtuellen, dreidimensionalen Oberflächengeometrien 9 hinzugezogen werden.

Eine solche Optimierung kann beispielsweise ein Einfärben des Modells sein. Hierfür können die Zähne in üblicherweise intraoralen Strukturen entsprechenden Weiß- und Rosatönen eingefärbt werden. Dafür können beispielweise statistische Farbmittelwerte oder an den intraoralen Strukturen direkt gemessene Farbwerte herangezogen werden.

In einer weiteren, bevorzugten Durchführungsform der Erfindung werden nicht nur die Zähne als Gesamtheit als eigenes Segment S1 betrachtet, sondern jeder Zahn wird als eigenes Segment S1.1, S1.2, S1.3, S1.4 betrachtet. Hierfür ist es nur erforderlich, dass das System erkennt, dass es sich um einen Zahn handelt, nicht jedoch, um welchen Zahn (also beispielsweise: zweiter Schneidezahn oben links). Da die zweidimensionalen Bilder aufgrund der Bewegung des Intraoralscanners üblicherweise als Abfolge erzeugt werden, kann bei zwei aufeinanderfolgenden Bildern davon ausgegangen werden, dass zumindest eine bereichsweise Überschneidung der Bilder vorliegt. Ein ZahnSegment in einem Bild wird in einem folgenden Bild solange als derselbe Zahn angenommen, bis eine Übergangszone zwischen zwei Zahnsegmenten erkannt wird. Ab dieser Stelle wird dann davon ausgegangen, dass es sich um einen anderen Zahn handelt.

Ein derart weiterentwickeltes Verfahren erkennt also lediglich "erster gesehener Zahn", "zweiter gesehener Zahn", usw., jedoch nicht, ob es sich dabei beispielsweise um einen Schneidezahn handelt, oder ob dieser im Ober- oder Unterkiefer angeordnet ist.

Auf einer derartigen, weiterentwickelten Segmentierung basierende virtuelle, dreidimensionale Oberflächengeometrien können beispielsweise verwendet werden, um im Modell einzelne Zähne auszublenden oder beispielsweise auch, um Zähne im Rahmen orthodontischer Simulationen einzeln zu bewegen.

### Bezugszeichenliste

- 1: intraorale Strukturen
- 2: zweidimensionale Bilder
- 3: Segment S1 (Zahn)
- 4: Segment S2 (Zahnfleisch)
- 5: Segment S3 (Übergang)
- 6: Segment S4 (Rest, Weichgewebe)
- 7: ausgewählte Segmente (3, 4)
- 8: 2,5D Oberflächen
- 9: virtuelle, dreidimensionale Oberflächengeometrien

## Patentansprüche

1. Computerimplementiertes Verfahren zum Erfassen von dreidimensionalen Oberflächengeometrien von realen, intraoralen Strukturen, bei dem zweidimensionale Bilder der intraoralen Strukturen in dreidimensionale, virtuelle Oberflächengeometrien umgewandelt werden, **dadurch gekennzeichnet, dass** Pixel der zweidimensionalen Bilder jeweils in wenigstens ein Segment aufgeteilt werden, dass jedes Segment ein Label erhält, dass jedes Segment eines zweidimensionalen Bildes mit wenigstens einer Art der realen, intraoralen Strukturen korrespondiert, dass es wenigstens zwei Arten von Segmenten gibt, dass jede Art von Segment ein anderes Label hat und dass wenigstens eines der Label Zähne und zahnartige Strukturen repräsentiert.

2. Computerimplementiertes Verfahren nach Anspruch 1, **dadurch gekennzeichnet, dass** das Segmentieren durch eine künstliche Intelligenz erfolgt und dass die künstliche Intelligenz vorzugsweise ein neuronales Netzwerk, insbesondere ein Convolutional Neural Network ist.

3. Computerimplementiertes Verfahren nach Anspruch 1 oder 2, **dadurch gekennzeichnet, dass** die Arten von intraoralen Strukturen wenigstens eine der folgenden Arten beinhalten:
- weiches Gewebe, insbesondere Zungen, Wangen und dergleichen,
- hartes Gewebe, insbesondere Zahnfleisch,
- zahnartige Strukturen, insbesondere Zähne oder Zahnersatz, der Zähnen nachempfunden ist,
- künstliche Strukturen, die als solche zu erkennen sind,
- Übergangsbereiche zwischen einzelnen Arten von Strukturen,
- Rest.

4. Computerimplementiertes Verfahren nach einem der Ansprüche 1 bis 3, **dadurch gekennzeichnet, dass** für jeden aufgenommenen Zahn ein eigenes Label vergeben wird.

5. Computerimplementiertes Verfahren nach einem der Ansprüche 1 bis 4 **dadurch gekennzeichnet, dass** wenigstens ein Label ausgewählt wird und dass nur die Segmente mit dem/den ausgewählten Label(s) zum Bilden der virtuellen, dreidimensionalen Oberflächengeometrien verwendet werden.

6. Computerimplementiertes Verfahren nach einem der Ansprüche 1 bis 5, **dadurch gekennzeichnet, dass** die Labels auch in der erzeugten virtuellen, dreidimensionalen Oberflächengeometrie erhalten bleiben.

7. Computerimplementiertes Verfahren nach Anspruch 6, **dadurch gekennzeichnet, dass** die erhalten gebliebenen Labels für Optimierungen, insbesondere ein Einfärben des Modells, verwendet werden.

8. Computerimplementiertes Verfahren nach einem der Ansprüche 1 bis 7, **dadurch gekennzeichnet, dass** die Labels neben der Art der intraoralen Struktur auch eine Wahrscheinlichkeit aufweisen, die angibt, wie wahrscheinlich ein korrektes Label vergeben wurde.

9. Computerimplementiertes Verfahren nach Anspruch 8, **dadurch gekennzeichnet, dass** die Wahrscheinlichkeit des Labels in eine Gewichtung der dreidimensionalen, virtuellen Oberflächengeometrie einfließt.

10. Computerimplementiertes Verfahren nach einem der Ansprüche 1 bis 9, **dadurch gekennzeichnet, dass** die Bilder aufgenommen werden, während die Strukturen sequenziell mit einer von wenigstens zwei, bevorzugt vier, Arten von Licht beleuchtet werden.

11. Computerimplementiertes Verfahren nach Anspruch 10, **dadurch gekennzeichnet, dass** die Bilder aufgenommen werden, während die Strukturen sequenziell mit einer von drei Arten von Licht beleuchtet werden und dass die drei Arten von Licht Licht in verschiedenen Farben, bevorzugt rot, grün oder blau projiziertes Licht sind.

12. Computerimplementiertes Verfahren nach Anspruch 10 oder 11, **dadurch gekennzeichnet, dass** das Segmentieren durch das neuronale Netzwerk auf Basis einer reflektierten Lichtintensität in Abhängigkeit von der projizierten Farbe erfolgt.

13. Computerimplementiertes Verfahren nach einem der Ansprüche 10 bis 12, **dadurch gekennzeichnet, dass** eine Art von Licht strukturiert, insbesondere als Muster, auf die intraoralen Strukturen projiziert wird.

14. Computerimplementiertes Verfahren nach einem der Ansprüche 1 bis 13, **dadurch gekennzeichnet, dass** die Bilder mit einem monochrom arbeitenden Sensor erfasst werden.

15. Computerimplementiertes Verfahren nach einem der Ansprüche 1 bis 14, **dadurch gekennzeichnet, dass** ein Bereich der virtuellen, dreidimensionalen Oberflächengeometrie mittels Daten aus mit dem Bereich korrespondierenden Pixeln wenigstens eines zweidimensionalen Bildes aktualisiert wird, und dass erfasst wird, wie oft die Pixel ein bestimmtes Label aufweisen..

16. Computerimplementiertes Verfahren nach Anspruch 15, **dadurch gekennzeichnet, dass** das Erfassen des Labels für jedes Label erfolgt.
